Europäisches Patentamt

European Patent Office

Office européen des brevets

(11) Veröffentlichungsnummer: **0 017 641**
**B1**

⑫ · **EUROPÄISCHE PATENTSCHRIFT**

(45) Veröffentlichungstag der Patentschrift:
06.04.83

(21) Anmeldenummer: 80890009.6

(22) Anmeldetag: 18.01.80

(51) Int. Cl.³: **B 05 D 7/16**

(54) Verfahren zum Auftragen von Überzügen auf metallische Gegenstände, sowie Vorrichtung zur Durchführung dieses Verfahrens.

(30) Priorität: 04.04.79 AT 2505/79

(43) Veröffentlichungstag der Anmeldung:
15.10.80 Patentblatt 80/21

(45) Bekanntmachung des Hinweises auf die Patenterteilung:
06.04.83 Patentblatt 83/14

(84) Benannte Vertragsstaaten:
CH DE GB IT NL SE

(56) Entgegenhaltungen:
DE-A-1 621 981
DE-A-1 813 552
DE-A-2 415 297
DE-A-2 716 118
US-A-3 397 077

(73) Patentinhaber: VOEST-ALPINE Aktiengesellschaft,
Friedrichstrasse 4, A-1011 Wien (AT)

(72) Erfinder: Hans, Walter, Burggasse 12,
A-8652 Kindberg/Aumühl (AT)
Erfinder: Hirn, Karl, Fressnitz 77, A-8670 Krieglach (AT)
Erfinder: Kohlbacher, Heinz, Knappenhofgasse 10,
A-8650 Kindberg (AT)

(74) Vertreter: Kretschmer, Adolf, Dipl.-Ing.,
Schottengasse 3a, A-1014 Wien (AT)

ACTORUM AG

# Verfahren zum Auftragen von Überzügen auf metallische Gegenstände, sowie Vorrichtung zur Durchführung dieses Verfahrens.

Die Erfindung bezieht sich auf ein Verfahren zum Auftragen von Überzügen auf metallische Gegenstände, wie Rohre, Bänder oder Bleche, insbesondere zum Aussenbeschichten von unlegierten Stahlrohren, bei welchem die Gegenstände vor dem Beschichten gereinigt werden und anschliessend auf die Gegenstände ein in Wasser gelöster Lack durch Sprühen aufgetragen wird, sowie auf eine zur Durchführung dieses Verfahrens geeignete Vorrichtung. Rohre, Bänder oder Bleche, welche aus nichtrostbeständigen Stählen bestehen, unterliegen sowohl bei der Lagerung als auch beim Transport einer Korrosion und werden besonders an den Aussenflächen leicht von Rost befallen. Wenn beispielsweise solche Rohre verarbeitet oder verlegt werden sollen, müssen diese Rohre in aufwendiger Weise mit Metallbürsten, Sandstrahl oder anderen geeigneten Methoden von anhaftendem Rost oder Korrosionsprodukten befreit werden, bevor sie mit einem Anstrich versehen werden können.

Es wurde weiters bereits vorgeschlagen, in Lösungsmitteln gelöste Lacke bei Oberflächentemperaturen über dem Siedepunkt des Lösungsmittels aufzutragen, um die Trocknungszeit zu verkürzen. Ein derartiges Verfahren bringt jedoch die Gefahr von Blasenbildungen und damit der Ausbildung von schlecht haftenden Überzügen mit sich. Die Verwendung von wasserlöslichen Lacken beim Sprühbeschichten von Gegenständen gemäss dem eingangs genannten Verfahren ist aus der DE-A-2 716 118 bekanntgeworden. Bei der Verwendung von wasserlöslichen Lacken ist jedoch nach dem Sprühen eine längere Trockenzeit bei Umgebungstemperatur mit nachfolgender Erhitzung zum Aushärten erforderlich. Aus der US-A-3 397 077 ist ein Beschichten mit in Wasser löslichen Lacken bekanntgeworden, bei dem das Werkstück mit Oberflächentemperaturen, die bei der Umgebungstemperatur oder bis hinauf zu hohen Temperaturen durch Erwärmung, bis maximal eta 480°C, liegen, in die Lacklösung eingetaucht wird, wobei die Lacklösung selbst Temperaturen zwischen der Umgebungstemperatur und der Siedetemperatur der Lacklösung aufweist. Nach der Beschichtung im Tauchverfahren wird die beschichtete Oberfläche mit Wasser gespült und entweder noch einmal erhitzt oder gleich bei Lufttemperatur getrocknet. In dieser Literaturstelle ist auch darauf verwiesen, dass das Auftragen des in Wasser gelösten Lacks auch durch Sprühen möglich ist, jedoch werden für eine derartige Verfahrensweise keine konkreten Bedingungen angegeben.

Die Erfindung zielt nun darauf ab, ein Verfahren der eingangs genannten Art zu schaffen, mit welchem die Trocknungszeit nach dem Auftragen des wasserlöslichen Lacks wesentlich herabgesetzt werden kann und mit welchem eine kontinuierliche Beschichtung von metallischen Gegenständen, wie Rohren, Bändern oder Blechen, zum Zwecke des Grundierens oder Lackierens möglich ist. Das Verfahren soll hiebei bevorzugt unmittelbar nach der Herstellung von Rohren anwendbar sein und daher in eine Fertigungsstrasse für die zu überziehenden Gegenstände integriert werden können. Solche geschützte Gegenstände sind vor allem während der nachfolgenden Lagerung und beim Transport gegen Rost und Korrosion geschützt und können in einfacher Weise mit dem gewünschten Deckanstrich vom Verarbeiter versehen werden.

Zur Lösung dieser Aufgabe besteht die Erfindung im wesentlichen darin, dass die Gegenstände mit Heisswasser bei einer Temperatur von 50 bis 90°C in an sich bekannter Weise gereinigt und vor dem Beschichten erwärmt werden, dass auf die Gegenstände bei Oberflächentemperaturen der zu beschichtenden Gegenstände von wenigstens 50°C und unter dem Siedepunkt von Wasser ein mit Wasser verdünnbarer, in Wasser gelöster Lack in an sich bekannter Weise durch Sprühen, insbesondere Rotationssprühen, vorzugsweise im elektrostatischen Feld, so aufgetragen wird, dass bereits bei der Verstäubung und Versprühung der Hauptanteil des Lösungsmittels verdunstet, und dass der an der Oberfläche der noch warmen Gegenstände anhaftende Lackfilm in an sich bekannter Weise, vorzugsweise durch Aufsprühen von kaltem Wasser, gekühlt wird. Wasserverdünnbare Lacke weisen in der Regel etwa 45% Lackfestkörper auf und enthalten als Lösungsmittel Wasser in einem Anteil von ca. 45 Gew.-%. Der Anteil an organischen Lösungsmitteln macht bei diesen Lacken nur einen Prozentsatz von etwa 10% aus. Solche Lacke werden durch gegebenenfalls noch anhaftendes von der Reinigung und Vorwärmung herrührendes Wasser in ihrer Haftfähigkeit nicht beeinträchtigt und neigen bei den verhältnismässig hohen Temperaturen von etwa 70°C nicht zur Blasenbildung. Diese Lacke können in bekannter Weise durch Sprühen, beispielsweise mit elektrostatisch arbeitenden, schnell rotierenden Sprühglocken, aufgebracht werden, wobei bereits bei der Zerstäubung und Versprühung der Hauptanteil des Lösungsmittels verdunstet. Da dieses Lösungsmittel hauptsächlich aus Wasser besteht, sind keine aufwendigen Umweltschutzeinrichtungen erforderlich, und es entstehen vor allen Dingen nicht wie bei den konventionellen Lacken unangenehm riechende, gesundheitsschädliche und oft auch leicht entflammbare Dämpfe. Der Wasserdampf kann in einfacher Weise abgesaugt werden. Erfindungsgemäss wird hiebei so vorgegangen, dass die Gegenstände mit Heisswasser bei einer Temperatur von 50 bis 90°C, vorzugsweise 60 bis 80°C, welchem Reinigungsmittel, insbesondere Phosphate, zugesetzt sein können, gereinigt und erwärmt werden. Die Verwendung von Heisswasser erlaubt hiebei in einfacher Weise sowohl die erforderliche Vorwärmung zur Verkürzung der Beschichtungszeit und damit Verringerung des Platzbedarfes der erforderlichen Anlage, als auch eine wirkungsvolle Reinigung der Oberflächen der zu beschichtenden Gegenstände. Die kurze, für das Beschichten benötigte Zeit erlaubt es, beispielsweise Rohre in ihrer Längsrichtung durch eine Beschichtungsanlage hindurchzuführen, und erlaubt die Ausbildung von Vorrichtungen, welche nur einen äusserst geringen Platz beanspruchen. Es ist bereits bekannt, Gegenstände, welche mit Kunststoff beschichtet werden, vor der Beschichtung zu erwärmen. Derartige Verfahren sind aber äusserst aufwendig, und einer Erwärmung von Gegenständen vor einem einfachen Lackieren stand bisher das Vorurteil entgegen, dass die Lackschicht auf dem erwärmten Gegenstand zur Blasenbildung neigt. Eine solche Blasenbildung kann zuverlässig dadurch vermieden werden, dass die Gegenstände auf Temperaturen von 50 bis 80 °C, insbesondere 70 °C, erwärmt werden.

Um eine kontinuierliche Durchförderung und Abförderung der metallischen Gegenstände mit hoher Geschwindigkeit zu ermöglichen, wir vorzugsweise so vorgegangen, dass der an der Oberfläche der noch warmen Gegenstände anhaftende Lackfilm vorzugsweise durch Aufsprühen von kaltem Wasser, welches anschliessend mit Pressluft abgeblasen wird, gekühlt wird. Auf diese Weise wird der noch weiche Lackfilm durch das kalte Wasser rasch gehärtet und kann ohne Schwierigkeiten und Gefahr einer Beschädigung der Oberfläche mit konventionellen Transporteinrichtungen weiter befördert werden.

Die erfindungsgemässe Vorrichtung zur Durchführung dieses Verfahrens ist im wesentlichen gekennzeichnet durch eine Fördereinrichtung für die metallischen Gegenstände, eine quer zur Fördereinrichtung sprühende Hochdruck-Heisswasserstrahleinrichtung, eine dieser in Förderrichtung nachgeschaltete, von der Fördereinrichtung durchsetzte Lackierkabine mit quer zur Fördereinrichtung angeordneten, in Rotation versetzbaren Sprühköpfen für einen in Lösungsmittel gelösten Lack und eine in Förderrichtung unmittelbar nachgeschaltete Kühleinrichtung, welche zwischen der Lackierkabine und der ersten in Förderrichtung folgenden Abstützung der Fördereinrichtung angeordnet ist. Eine derartige Einrichtung kann ohne weiteres einen Bestandteil der Herstellungsstrasse für Rohre, Bänder oder Bleche bilden. Vorzugsweise ist hiebei die Lackierkabine mit mit hoher Umdrehungszahl rotierenden Sprühglocken ausgebildet, an welche eine Hochspannungsquelle anschliessbar ist. Bei einer solchen Ausbildung verdunstet das Lösungsmittel zum grössten Teil, bevor es auf die Oberfläche des zu beschichtenden Gegenstandes auftrifft, und es ist lediglich erforderlich, eine Lackierkabine und eine geeignete Absaugvorrichtung für die Lösungsmitteldämpfe, welche bevorzugt nur Wasserdämpfe sind, vorzusehen. In bevorzugter Weise ist die Ausbildung so getroffen, dass die Fördereinrichtung Abstützrollen aufweist, von welchen wenigstens eine der Lackierkabine vorgeschaltet und mit den Gegenständen in Kontakt kommende Rolle leitfähig gemacht und geerdet ist. Auf diese Weise ist die für elektrostatische Verfahren erforderliche Potentialdifferenz sichergestellt.

Vorzugsweise weist die Kühleinrichtung eine Kaltwassersprüheinrichtung und ein in Förderrichtung nachgeschaltetes Gebläse oder Pressluftdüsen auf, wobei zumindest die Kaltwassersprüheinrichtung vor der ersten der Lackierkabine nachgeschalteten Abstützrolle angeordnet ist. Durch diese Ausbildung ist sichergestellt, dass die Lackierung bereits hinreichend ausgehärtet ist, bevor sie mit der nächsten Abstützrolle in Berührung kommt und gegen Beschädigungen unempfindlich geworden ist.

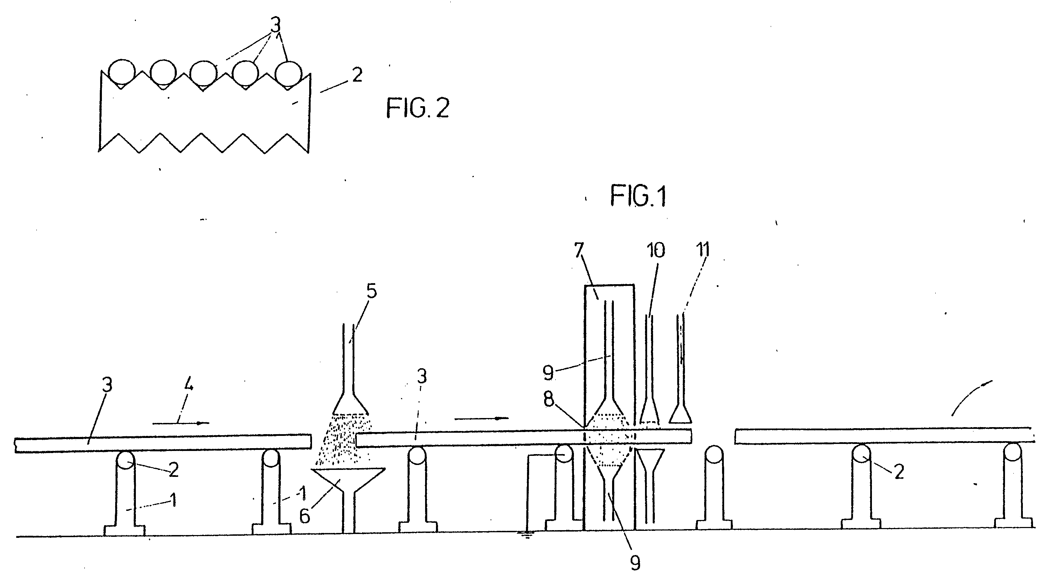

Die Erfindung ist nachfolgend an Hand einer in der Zeichnung schematisch dargestellten Vorrichtung zur Durchführung des erfindungsgemässen Verfahrens näher erläutert. In dieser zeigen Fig. 1 eine schematische Darstellung der erfindungsgemässen Anlage in einer Seitenansicht und Fig. 2 einen Schnitt durch eine Förderrolle zur Aufnahme mehrerer Rohre nebeneinander.

Auf einem Rollengerüst 1 sind Förderrollen 2 drehbar gelagert, über welche Rohre 3 in Richtung des Pfeiles 4, welcher die Förderrichtung symbolisiert, gefördert werden. Mit 5 ist eine Heisswasserstrahleinrichtung bezeichnet, in welcher Heisswasser unter Druck auf die Rohre 3 aufgesprüht wird, wobei das abfliessende Wasser in einem Trichter 6 gesammelt wird und ohne weiteres im Kreislauf geführt werden kann. Das der Heisswasserstrahleinrichtung zugeführte Wasser kann beispielsweise über einen Durchlauferhitzer erwärmt werden, wobei die Erwärmung auf eine Temperatur erfolgen soll, welche unterhalb des Siedepunktes des Lacklösungsmittels liegt. Die Temperatur des Heisswassers soll vorzugsweise bei Verwendung von wasserlöslichen Lacken maximal 80 °C betragen, wodurch eine Erwärmung des Rohres 3 sichergestellt ist, welche im Inneren der nachfolgenden Lackierkabine 7 eine Oberflächentemperatur von maximal 70 °C ergibt. Das Heisswasser tritt hiebei vorzugsweise aus Ringdüsen unter einem Druck von etwa 60 bar aus, wodurch sich eine sehr gute Reinigung der Oberfläche der Rohre von Fetten, Ölen und anderen Verunreinigungen ergibt. Im Heisswasser können Phosphate und andere Reinigungsmittel zugesetzt werden und wird nur bis zu einem bestimmten Verschmutzungsgrad im Kreislauf geführt.

Die Fördergeschwindigkeit in Richtung des Pfeiles 4 beträgt bei der in Fig. 1 dargestellten Anlage 1 m/min. Durch die Berührung mit den Rollen 2 und die Benetzung mit Wasser sind die Rohre ausgezeichnet geerdet, wie es für das elektrostatische Aufbringen von Lacken notwendig ist. Durch die Eigenwärme der Rohre verdunstet nun der verhältnismässig dünne Wasserfilm bis zur Eingangsöffnung 8 der Lackierkabine 7, so dass die Rohre im Inneren der Lackierkabine bereits volkommen trocken sind. Im Inneren der Lackierkabine 7 sind Hochrotations-Sprühglocken 9 angeordnet, die mit einer Spannung bis zu 150 kV aufgeladen werden und mit einer Umdrehungsgeschwindigkeit von etwa 40 000 U/min den Lack zerstäuben. In diesen Sprühglocken wird wasserlöslicher Lack versprüht, welcher im wesentlichen aus 45% Lackfestkörper, 45% Wasser und 10% organischen Lösungsmitteln, besteht. Die Lackteilchen sind elektrostatisch aufgeladen und schlagen sich dem aufgebauten Hochspannungsfeld folgend auf die Rohre nieder und bilden einen zusammenhängenden Lackfilm. Durch die feine Zerstäubung des Lackes und durch die Hochrotations-Sprühglocken oder Scheiben verflüchtigt schon ein grosser Anteil des Lösungsmittels, welches aus gewöhnlichem Wasser besteht. Durch die Eigenwärme der Rohre 3 wird der Rest des Wassers aus dem Lackfilm ausgetrieben, so dass die Rohre schon fast trocken die Lackierkabine 7 verlassen. Da der Lackfestkörper bzw. das Harz des Lackes im Lackfilm auf den Rohren durch die Temperatur der Rohre noch etwas weich ist, werden diese durch eine nachfolgende Kaltwasserdusche 10 abgekühlt. Durch eine entsprechende Pressluftdusche 11 werden die Rohre weiter gekühlt und von anhaftendem Wasser befreit, bevor sie die erste Rolle im Auslaufrollgang berühren. Die Rohre kommen dann auf einen Auslaufrollgang, wo sie durch eine entsprechende Einrichtung in bekannter Weise abgehoben werden.

Ausführungsbeispiel: Mittelschwere Gewinderohre in einer Länge von 6 m und einem Aussendurchmesser von 42,9 mm Max. bei einem Gewicht von 3,84 kg/m mit glatten Enden werden durch eine Aufgabevorrichtung auf den Rollengang gehoben. Sie bewegen sich mit einer Geschwindigkeit von 1 m/min in Richtung Lackierkabine 7. Die Rohre 3 werden durch die Heisswassersprüheinrichtung 5 auf eine Temperatur von 60 °C gebracht. Beim Passieren der Heisswassersprühdüse 5 werden die Rohre nicht nur erwärmt, sodern durch den Hochdruckstrahl, der mit einem Druck von 60 bar arbeitet, zugleich gereinigt. In der Lackierkabine 7 werden die Rohre von den elektrostatischen Sprühköpfen 9 mit einer wasserverdünnbaren Grundierung versehen. Der Farbton ist z.B. schwarz, und die Farbe besteht hauptsächlich aus wasserverdünnbaren Alkydharzen. Die Viskosität des Lackes beträgt 50''/4 mm bei einer Lackmenge von 250 ml/min. Der Sprühwolkendurchmesser ist ca. 600 mm, und der Abstand der Rohre voneinander muss mindestens 1,5mal ihren Durchmesser betragen. Bei einer Durchlaufgeschwindigkeit von 1 m/min wird auf den Rohren 3 eine Schichtstärke des Lackes von 30–40 Mikron erzielt. Der Lack enthält aktive Rostschutzpigmente und ist wegen seines hohen Wassergehaltes nicht entflammbar und daher in die Gefahrenklasse 0 einzureihen. Nachdem die Rohre 3 die Lackierkabine 7 verlassen haben, werden sie durch eine Kaltwasserdusche 10 geführt, um den Lackfilm härter zu machen. Mit der Luftdusche 11 findet eine weitere Abkühlung der Rohre 3 statt, wobei anhaftendes Wasser entfernt wird. Vom Auslaufrollgang werden die Rohre durch eine entsprechende Hubeinrichtung abgehoben und auf Lager gelegt.

## Patentansprüche

1. Verfahren zum Auftragen von Überzügen auf metallische Gegenstände (3), wie Rohre, Bänder oder Bleche, insbesondere zum Aussenbeschichten von unlegierten Stahlrohren, bei welchem die Gegenstände vor dem Beschichten gereinigt werden und anschliessend auf die Gegenstände ein in Wasser gelöster Lack durch Sprühen aufgetragen wird, dadurch gekennzeichnet, dass die Gegenstände mit Heisswasser (bei 5) bei einer Temperatur von 50 bis 90 °C in an sich bekannter Weise gereinigt und vor dem Beschichten erwärmt werden, dass auf die Gegenstände bei Oberflächentemperaturen der zu beschichtenden Gegenstände von wenigstens 50 °C und unter dem Siedepunkt von Wasser ein mit Wasser verdünnbarer, in Wasser gelöster Lack in an sich bekannter Weise durch Sprühen, insbesondere Rotationssprühen, vorzugsweise im elektrostatischen Feld, so aufgetragen wird (bei 7–9), dass bereits bei der Verstäubung und Versprühung der Hauptanteil des Lösungsmittels verdunstet, und dass der an der Oberfläche der noch warmen Gegenstände anhaftende Lackfilm in an sich bekannter Weise, vorzugsweise durch Aufsprühen von kaltem Wasser (bei 10), gekühlt wird.

2. Verfahren nach Anspruch 1, dadurch gekennzeichnet, dass in Wasser gelöste wasserlösliche Lacke auf die Gegenstände aufgesprüht werden, deren Oberflächentemperatur maximal 80 °C beträgt und vorzugsweise 70 °C zum Zeitpunkt des Besprühens nicht überschreitet.

3. Verfahren nach Anspruch 1 oder 2, dadurch gekennzeichnet, dass die Gegenstände mit Heisswasser einer Temperatur von 60 bis 80 °C, welchem Reinigungsmittel, insbesondere Phosphate, zugesetzt ist, gereinigt und erwärmt werden.

4. Verfahren nach einem der Ansprüche 1, 2 oder 3, dadurch gekennzeichnet, dass das an dem Lackfilm anhaftende Kühlwasser in an sich bekannter Weise mit Pressluft abgeblasen wird.

5. Vorrichtung zur Durchführung des Verfahrens nach einem der Ansprüche 1 bis 4, gekennzeichnet durch eine Fördereinrichtung (2) für die metallischen Gegenstände (3), eine quer zur Fördereinrichtung sprühende Hochdruck-Heisswasserstrahleinrichtung (5), eine dieser in Förderrichtung nachgeschaltete, von der Fördereinrichtung durchsetzte Lackierkabine (7) mit quer zur Fördereinrichtung angeordneten, in Rotation versetzbaren Sprühköpfen (9) für einen in Wasser gelösten Lack und eine in Förderrichtung unmittelbar nachgeschaltete Kühleinrichtung (10, 11), welche zwischen der Lackierkabine (7) und der ersten in Förderrichtung (4) folgenden Abstützung der Fördereinrichtung (2) angeordnet ist.

6. Vorrichtung nach Anspruch 5, dadurch gekennzeichnet, dass die Lackierkabine (7) mit mit hoher Umdrehungszahl rotierenden Sprühglocken (9) ausgebildet ist, an welche eine Hochspannungsquelle anschliessbar ist.

7. Vorrichtung nach Anspruch 5 oder 6, dadurch gekennzeichnet, dass die Fördereinrichtung Abstützrollen (2) aufweist, von welchen wenigstens eine der Lackierkabine (7) vorgeschaltete und mit den Gegenständen in Kontakt kommende Rolle leitfähig gemacht und geerdet ist.

8. Vorrichtung nach Anspruch 5, 6 oder 7, dadurch gekennzeichnet, dass die Kühleinrichtung eine Kaltwassersprüheinrichtung (10) und ein in Förderrichtung nachgeschaltetes Gebläse oder Pressluftdüsen (11) aufweist, wobei zumindest die Kaltwassersprüheinrichtung (10) vor der ersten der Lackierkabine (7) nachgeschalteten Abstützrolle (2) angeordnet ist.

**Claims**

1. Process for applying coatings onto metallic objects (3) such as tubes, tapes or sheets, particularly for externally coating of unalloyed steel tubes, in which the objects are, prior to being coated, cleaned and a lacquer dissolved in water is subsequently applied to the objects by spraying, characterized in that the objects are, in a manner known per se, cleaned (at 5) with hot water at a temperature of 50 to 90 °C and heated prior to being coated, in that a lacquer capable of being diluted with water and diluted in water is applied onto the objects at superficial temperatures of the objects to be coated of at least 50 °C in a manner known per se by spraying, particularly by rotative spraying and preferably in an electrostatical field, such that the major portion of the solvent evaporates already during atomizing and spraying and in that the film of lacquer adhering to the surface of the still warm objects is cooled in a manner known per se, preferably by spraying (at 10) cold water onto the objects.

2. Process as claimed in claim 1, characterized in that water-soluble lacquers dissolved in water are sprayed onto the objects having a maximum superficial temperature of 80 °C, said superficial temperature preferably not exceeding 70 °C at the moment of spraying.

3. Process according to claim 1 or 2, characterized in that the objects are cleaned and heated by means of hot water having a temperature of 60 to 80 °C and having added thereto cleaning agents, particularly phosphates.

4. Process according to any of claims 1, 2 or 3, characterized in that the cooling water adhering to the film of lacquer is, in a manner known per se, blown off with compressed air.

5. Device for performing the process according to any of claims 1 to 4, characterized by a conveying means (2) for the metallic objects (3), a means (5) for spraying hot water under high pressure in transverse direction to the conveying means, a varnishing compartment (7) arranged, seen in transport direction, behind the means for spraying hot water and being passed through by the conveying means and comprising spraying heads (9) for a lacquer dissolved in water being arranged in transverse direction to the conveying means and being capable of being rotated, and a cooling means (10, 11) immediately following in transport direction, which is arranged between the varnishing compartment (7) and the first support of the conveying means (2) following in transport direction (4).

6. Device as claimed in claim 5, characterized in that the varnishing compartment (7) is equipped with spraying bells (9) rotating with high rotational speed and to which a high voltage source can be connected.

7. Device according to claim 5 or 6, characterized in that the conveying means has support rollers (2), at least one of those rollers preceding the varnishing compartment (7) and coming in contact with the objects is made conductive and connected to ground.

8. Device according to claim 5, 6 or 7, characterized in that the cooling means has a spraying means (10) for cold water and a blower or compressed air nozzles (11) following in transport direction, at least the spraying means (10) for cold water being arranged before the first supporting roller (2) following the varnishing compartment (7).

**Revendications**

1. Procédé pour l'application des couches sur des objets métalliques (3), comme des tuyeaux, des rubans où des tôles, en particulier pour couvrir extérieurement des tubes an acier non allié, dans lequel les objets sont nettoyés avant l'application de la couche et une laque dissoute dans de l'eau est projeté par jets sur les objets, caractérisé en ce que les objets (3) sont nettoyés d'une manière connue à une temperature de 50 à 90 °C avec de l'eau chaude et chauffés avant l'application de la couche, en ce qu'une laque dissoute dans de l'eau et capable d'être diluée avec de l'eau est appliquée d'une manière connue sur les objets à couvrir à des temperatures superficielles d'au moins 50 °C mais en dessous du point d'ébullition de l'eau par projection, en particulier par projection rotative et de préférence dans un champ électrique, de sorte que la partie majeure du solvant s'évapore déjà pendant la pulverisation et la projection et en ce que le film de laque adhérant à la surface des objets étant encore chauds est refroidi d'une manière connue, de préférence en projetant (à 10) de l'eau froide.

2. Procédé selon la revendication 1, caractérisé en ce que des laques solubles dans de l'eau et dissoutes dans de l'eau sont projetées sur les objets ayant une temperature superficielle maximale de 80 °C et de préférence de 70 °C maximum au moment de la projection.

3. Procédé selon les revendications 1 ou 2, caractérisé en ce que les objets sont nettoyés et chauffés avec de l'eau chaude ayant une température de 60 à 80 °C et contenant comme additif un agent de nettoyage, en particulier des phosphates.

4. Procédé selon une des revendications 2 ou 3, caractérisé en ce que l'eau refrigérante, qui adhère au film de laque, est d'une manière connue enlevée en soufflant avec air comprimé.

5. Dispositif pour l'exécution du procédé selon une des revendications 1 à 4, caractérisé par un moyen de transport (2) pour les objets (3) métalliques, par un moyen (5) projetant de l'eau chaude à haute pression en direction transversale à la direction de transport, par une cabine (7) de vernissage suivant en direction de transport le moyen projétant de l'eau et étant transversée du moyen de transport et comprenant des têtes (9) de projection pour une laque dissoute dans de l'eau arrangées en direction transversale par rapport à la direction de transport et adaptées d'être mis en rotation et par un moyen (10, 11) de refroidissement suivant immédiatement en direction de transport et étant arrangé entre la cabine (7) de vernissage et le support du moyen (2) de transport qui suit comme premier support en direction (4) de transport.

6. Dispositif selon la revendication 5, caractérisé en ce que la cabine (7) de vernissage est équipée de cloches (9) de projection tournantes à grande vitesse rotative et étant adaptés d'être connectées à une source à haute tension.

7. Dispositif selon la revendication 5 ou 6, caractérisé en ce que le moyen de transport comprend des rouleaux (2) de support, aumoins un des rouleaux, arrangés devant la cabine (7) de vernissage et en contact avec les objets, étant conductif et connecté avec la terre.

8. Dispositif selon les revendications 5, 6 ou 7, caractérisé en ce que le moyen de refroidissement comprend un moyen (10) de projection de l'eau froide et une soufflerie ou des buses (11) à air comprimé, au moins un moyen (10) de projection de l'eau froide étant arrangé devant le premier rouleau de support (2) suivant la cabine (7) de vernissage.

FIG.1

FIG.2